# EUROPÄISCHE PATENTANMELDUNG

(11) **EP 4 435 197 A1**
(43) Veröffentlichungstag der Anmeldung: **25.09.2024**
(21) Anmeldenummer: 24162580.5
(22) Anmeldetag: 11.03.2024
(51) Int. Cl.: E04F 10/06, E06B 9/50

(54) **MARKISE**

(30) Priorität: 24.03.2023 DE 102023107500
(71) Anmelder: STOBAG AG, 5630 Muri (CH)
(72) Erfinder: Hofer, Yannick, CH-4600 Olten (CH); Hess, Jan, CH-5600 Lenzburg (CH); Furrer, Josua, CH-6284 Gelfingen (CH)
(74) Vertreter: Lichti - Patentanwälte Partnerschaft mbB

(57) **Zusammenfassung**

Die Erfindung betrifft eine Markise (10) mit einer Tuchwelle (11), auf der ein Markisentuch (12) aufgewickelt ist, wobei die Tuchwelle (11) mittelbar oder unmittelbar an zumindest einem Halter angebracht und der Halter an einer Tragkonstruktion befestigbar ist, wobei auf zumindest einer Stirnseite (13) der Tuchwelle (11) eine Abdeckung (14) und auf der der Tuchwelle (11) abgewandten Außenseite (15) der Abdeckung (14) eine Blende (16) angeordnet ist, wobei die Abdeckung (14) zumindest eine Einsteckausnehmung (17) aufweist, in die ein Steckzapfen (18) der Blende (16) einsteckbar ist. Die Markise löst die erfindungsgemäße Aufgabe, bei der die Blende in einfacher Weise montierbar und demontierbar ist, dadurch, dass der Steckzapfen (18) an einem der Blende (16) abgewandten Klemmabschnitt (19) entlang seines Zapfenumfangs mit einer nutartigen Aussparung (20) versehen ist, in die ein elastisches Klemmelement (21) eingesetzt ist, das den Steckzapfen (18) umgibt und radial über den Steckzapfen (18) hervorsteht, wobei das Klemmelement (21) so ausgebildet ist, dass ein Herausziehen des Steckzapfens (18) aus der Einsteckausnehmung und/oder ein Einstecken des Steckzapfens (18) in die Einsteckausnehmung (17) unter elastischer Verformung des Klemmelements (21) möglich ist.

## Beschreibung

Die Erfindung betrifft eine Markise mit einer Tuchwelle, auf der ein Markisentuch aufgewickelt ist, wobei die Tuchwelle mittelbar oder unmittelbar an zumindest einem Halter angebracht und der Halter an einer Tragkonstruktion befestigbar ist, wobei auf zumindest einer Stirnseite der Tuchwelle eine Abdeckung und auf der der Tuchwelle abgewandten Außenseite der Abdeckung eine Blende angeordnet ist, wobei die Abdeckung zumindest eine Einsteckausnehmung aufweist, in die ein Steckzapfen der Blende einsteckbar ist.

Markisen der genannten Art dienen als Sonnenschutz bzw. zur Beschattung und weisen üblicherweise ein auf eine Tuchwelle aufgewickeltes Markisentuch auf, das manuell oder automatisch von der Tuchwelle abwickelbar und somit aufspannbar oder auf die Tuchwelle aufwickelbar und damit einziehbar ist. Die Tuchwelle ist üblicherweise zumindest an zwei seitlichen, in den Endbereichen der Tuchwelle angeordneten konsolenartigen Haltern gelagert. Die Tuchwelle kann direkt an den Haltern gelagert sein, es ist jedoch auch bekannt, die Tuchwelle mittelbar an den Haltern zu lagern, indem die Tuchwelle beispielsweise in einem gehäuseartigen Kasten aufgenommen ist und der Kasten auf die Halter aufgesetzt und an diesem befestigt ist.

Die Halter sind an einer Tragkonstruktion angebracht, bei der es sich beispielsweise um eine Gebäudewand, einen Stützrahmen oder eine sonstige Abstützung handeln kann, über die die an der Markise auftretenden Kräfte in den Boden abgeleitet werden können.

Im Folgenden soll beispielhaft von einer Markise ausgegangen werden, bei der die Tuchwelle in einem gehäuseartigen Kasten drehbar gelagert ist und der Kasten auf zwei beabstandete Halter aufgesetzt ist, wobei an den axialen Stirnseiten des Kastens jeweils eine Abdeckung angeordnet und an dem Kasten befestigt ist. Zu diesem Zweck werden Befestigungsschrauben von der dem Kasten abgewandten Außenseite der Abdeckung durch die Abdeckung hindurchgeführt und mit dem Kasten verschraubt. Diese Befestigungsschrauben sind somit nicht nur von der Außenseite sichtbar, sondern auch den Witterungseinflüssen ausgesetzt. Es ist bekannt, auf die Abdeckungen jeweils eine Blende aufzusetzen, die auf der der Tuchwelle bzw. dem Kasten abgewandten Außenseite der jeweiligen Abdeckung angeordnet und dort durch eine Schraubverbindung befestigt wird.

Wenn ein Benutzer Zugriff auf die Befestigungsschrauben benötigt, muss er zunächst die Verschraubung der Blende lösen, wozu er Werkzeug benötigt, das nicht immer verfügbar ist. Darüber hinaus sind die Montage und die Demontage der Abdeckungen zeitaufwändig und somit kostenintensiv.

Der Erfindung liegt die Aufgabe zugrunde, eine Markise der genannten Art zu schaffen, bei der die Blende in einfacher Weise montierbar und demontierbar ist.

Die Aufgabe wird erfindungsgemäß durch eine Markise nach Anspruch 1 gelöst, die dadurch gekennzeichnet ist, dass der Steckzapfen an einem der Blende abgewandten Klemmabschnitt entlang seines Zapfenumfangs mit einer nutartigen Aussparung versehen ist, in die ein elastisches Klemmelement eingesetzt ist, das den Steckzapfen umgibt und radial, d.h. senkrecht zur Längsachse des Steckzapfens, über den Steckzapfen hervorsteht, wobei das Klemmelement so ausgebildet ist, dass ein Herausziehen des Steckzapfens aus der Einsteckausnehmung und/oder ein Einstecken des Steckzapfens in die Einsteckausnehmung nur unter elastischer Verformung des Klemmelements möglich ist.

Dabei steht das Klemmelement radial so weit über den Steckzapfen hervor, dass das elastische Klemmelement mindestens beim Einstecken in die Einsteckausnehmung und beim Herausziehen aus der Einsteckausnehmung durch einen Abschnitt einer Innenwandung der Einsteckausnehmung soweit verformt wird und mit einer Rückstellkraft der Verformung entgegenwirkt, dass eine Mindestkraft zum Einstecken oder zum Herausziehen des Steckzapfens aus der Einsteckausnehmung aufgebracht werden muss.

Erfindungsgemäß wird durch die Rückstellkraft des elastischen Klemmelements eine Klemmkraft erzeugt, durch die der Steckzapfen in der Einsteckausnehmung gehalten und somit die Blende mit der Abdeckung kraftschlüssig verbunden ist. Vorteilhafterweise ist der Steckzapfen an der Blende festgeklebt oder mit der Blende verschweißt, sodass für den Benutzer weder die Verschraubung der Abdeckung noch der Steckzapfen oder die Einsteckausnehmung von außen sichtbar sind. Alternativ dazu ist es möglich, dass die Blende und der Steckzapfen als einstückiges monolithisches Bauteil, beispielsweise als Kunststoff-Spritzgussteil ausgebildet sind.

Erfindungsgemäß kann die Blende ohne Werkzeug abgenommen werden und im montierten Zustand die Verschraubung der Abdeckung zuverlässig vor Witterungseinflüssen schützen.

Da Zapfen üblicherweise einen kreisrunden Querschnitt aufweisen, kann vorteilhafterweise vorgesehen sein, dass das Klemmelement ein O-Ring beispielsweise aus Gummi oder einem gleichartigen Kunststoff ist.

Nach einer besonderen Ausführungsform der Erfindung kann vorgesehen sein, dass die Aussparung eine vollständig um den Steckzapfen umlaufende Ringnut ist. Bei der vollständig umlaufenden Ringnut kann das Klemmelement, beispielsweise in Ausgestaltung eines O-Rings, vorteilhafterweise vollständig in die Ringnut eingesetzt werden, sodass das Klemmelement gleichmäßig entlang des Zapfenumfangs über den Steckzapfen hervorsteht.

In Weiterbildung der Erfindung kann vorgesehen sein, dass der Querschnitt der Ringnut sich radial nach innen, d.h. in Richtung der Längsmittelachse des Steckzapfens konisch verjüngt.

Um dem Klemmelement ausreichend axiales Spiel zu ermöglichen, kann nach einer vorteilhaften Ausgestaltung der erfindungsgemäßen Markise vorgesehen sein, dass die Aussparung dazu ausgebildet ist, eine Verformung und/oder Verlagerung des Klemmelements entlang einer Längsachse des Steckzapfens zu ermöglichen. Dabei erlaubt das axiale, d.h. in Längsrichtung des Steckzapfens gemessene Spiel dem Klemmelement, sich beim Einstecken in die Einsteckausnehmung und beim Herausziehen aus der Einsteckausnehmung unter einer Verformung axial in Richtung der Längsachse des Steckzapfens in der Aussparung zu verformen oder zu verlagern. Dadurch kann das Klemmelement von der Innenwandung der Einsteckausnehmung entlang des Zapfenumfangs gleichmäßig verformt werden, sodass es zu keinen übermäßigen lokalen Verformungen des Klemmelements kommen kann.

Nach einer besonders vorteilhaften konstruktiven Ausführungsform der Erfindung kann vorgesehen sein, dass eine axiale Weite w der Aussparung in Richtung der Längsachse des Steckzapfens größer ist als eine Abmessung d des Klemmelements in Richtung der Längsachse des Steckzapfens. Dabei kann durch die axiale Weite w der Aussparung und optional durch eine radiale Tiefe der Aussparung bestimmt werden, wie weit das Klemmelement mit seiner Abmessung in die Aussparung eingesetzt wird. Diese konstruktiven Freiheitsgrade können dazu verwendet werden, zu bestimmen, wie sehr das Klemmelement beim Einstecken oder Herausziehen verformt wird und wie sehr das Klemmelement mit seiner Rückstellkraft dem Einstecken oder dem Herausziehen des Steckzapfens entgegenwirkt.

Berechnungen und Versuche zeigten, dass es erfindungsgemäß vorteilhaft sein kann, wenn das Verhältnis der Weite w zu der Abmessung d in einem Bereich von 1,1 bis 1,3 liegt, d.h. 1,1 · d ≤ w ≤ 1,3 · d. Vorzugsweise ist die Weite w größer als das 1,2-fache der Abmessung d, d.h. w ≥ 1,2 · d.

Um beim Einstecken dem Steckzapfen eine bessere Führung zu geben, kann nach einer vorteilhaften Ausgestaltung der Markise vorgesehen sein, dass der Steckzapfen in einem der Blende abgewandten Endbereich eine konisch verlaufende Querschnittsverjüngung aufweist. Die konisch verlaufende Querschnittsverjüngung des Endbereich kann optional auch mit einer konisch verlaufenden Innenwandung im Bereich einer Einstecköffnung der Einsteckausnehmung korrespondieren. Diese Selbstausrichtung der Blende beim Montieren ermöglicht eine noch einfachere Montage.

Um ein Abfallen der Blende von der Abdeckung zu verhindern, kann vorteilhafterweise vorgesehen sein, dass die Einsteckausnehmung an ihrer Innenwandung eine Hinterschneidung aufweist, die der Steckzapfen mit dem Klemmelement hintergreift, wenn er in die Einsteckausnehmung vorzugsweise vollständig eingesteckt ist. Dabei kann vorgesehen sein, dass das elastische Klemmelement nicht mehr von der Innenwandung der Einsteckausnehmung verformt wird, wenn der Steckzapfen vollständig in die Einsteckausnehmung eingesteckt ist.

Das Hintergreifen des Klemmelements an der Hinterschneidung ermöglicht dem Benutzer sowohl beim Montieren als auch beim Demontieren der Blende eine haptische Rückmeldung. Beim Montieren spürt der Benutzer beispielsweise, wann das Klemmelement die Hinterschneidung passiert hat und damit der Steckzapfen bestimmungsgemäß tief in der Einsteckausnehmung eingesteckt wurde und die Blende somit richtig montiert ist.

Um die Blende mit hoher Genauigkeit in einer vorbestimmten und gewünschten Position an der Abdeckung zu halten, kann an der Abdeckung eine Positioniereinrichtung für die Blende vorgesehen sein. Dabei kann in Ausgestaltung der Erfindung vorgesehen sein, dass die Abdeckung einen von zumindest einem Anschlagelement begrenzten Aufnahmeraum aufweist und dass die Blende in den Aufnahmeraum eingesetzt ist. Beispielsweise kann für das Anschlagelement vorgesehen sein, dass es von einer zumindest teilweise um den Aufnahmeraum umlaufenden Randkante gebildet ist.

Wenn die Blende in den Aufnahmeraum eingesetzt ist, verhindert das Anschlagelement bzw. die Randkante, dass die Blende sich in eine Querrichtung, d.h. senkrecht zu ihrer Einsetzrichtung und insbesondere senkrecht zur Längsachse der Tuchwelle verschiebt oder verdreht, da die Bewegung der Blende durch das Anschlagelement begrenzt oder verhindert ist. Vorzugsweise füllt die Blende den Aufnahmeraum vollständig aus und sitzt somit spielfrei oder mit nur geringem Spiel in dem Aufnahmeraum.

Nach einer optionalen Ausgestaltung der Erfindung kann vorgesehen sein, dass die Abdeckung und/oder die Blende zumindest abschnittsweise aus einem metallischen Werkstoff besteht. Dabei kann es sich bei der Blende um eine Platte und insbesondere eine metallene Platte handeln.

Um das Markisentuch vor Umwelteinflüssen zu schützen, kann optional vorgesehen sein, dass die Tuchwelle in einem Kasten angeordnet ist und dass der Kasten zwischen zwei Abdeckungen angeordnet und mit diesen verbunden ist. Dabei sind die Abdeckungen vorzugsweise an den stirnseitigen axialen Enden des Kastens angebracht oder ausgebildet und auf der dem Kasten bzw. der Tuchwelle abgewandten Außenseite der Abdeckungen ist jeweils eine der Blenden angeordnet. Der Kasten kann über separate Halter an der Tragkonstruktion angebracht sein.

Nachfolgend wird die erfindungsgemäße Markise exemplarisch anhand von schematischen Darstellungen beschrieben. Es zeigen:
- Fig. 1: eine perspektivische, auseinandergezogene Darstellung einiger Bauteile einer Markise,
- Fig. 2: eine perspektivische Darstellung einer Blende,
- Fig. 3: eine perspektivische Darstellung eines einzelnen Steckzapfens und
- Fig. 4: einen Abschnitt einer Abdeckung und einer Blende in montierter Position in einer Schnittdarstellung.

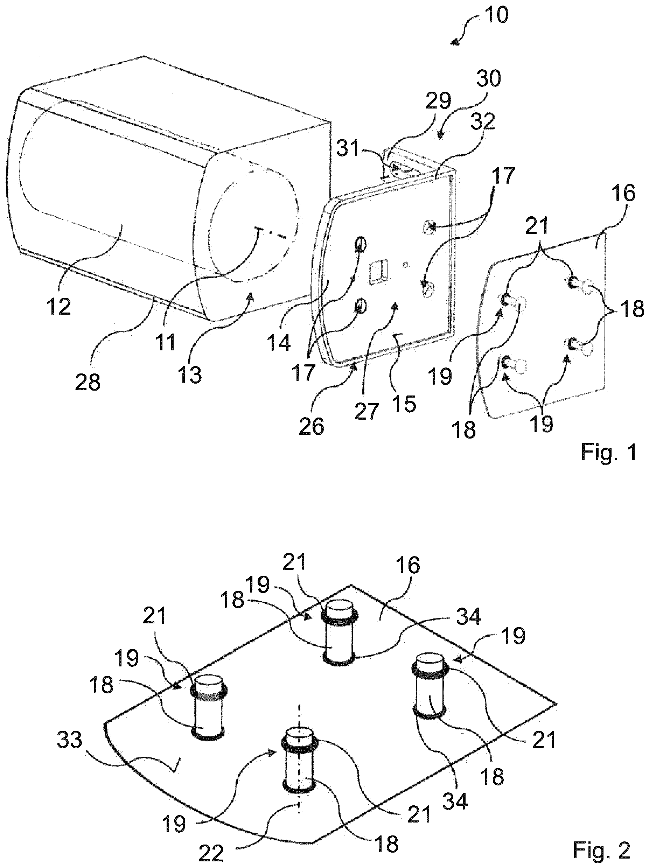

Figur 1 zeigt eine Markise 10 mit einer nur schematisch angedeuteten Tuchwelle 11, auf der ein ebenfalls nur schematisch dargestelltes Markisentuch 12 aufgewickelt ist. Die Tuchwelle 11 ist zusammen mit dem Markisentuch 12 in einem Kasten 28 angeordnet, der als Baueinheit in einer Werkstatt oder einem Werk vorgefertigt wird und am Einbauort montiert werden kann. Auf jeweils einer Stirnseite 13 des Kastens 28 kann eine plattenartige Abdeckung 14 aufgesetzt und an diesem, beispielsweise durch eine Verschraubung, befestigt werden.

Dabei sind ein konsolenartiger Halter 29 und die Abdeckung 14 zu einem einstückigen, monolithischen Bauteil in Form einer Abdeckungskonsole 30 zusammengefasst. In dem Halter 29 sind Langlöcher 31 ausgebildet, durch die beispielsweise eine Befestigungsschraube hindurchgreifen kann. Der Halter 14 kann im Anschluss auf einer Tragkonstruktion aufgesetzt und mittels der Befestigungsschraube an der Tragkonstruktion befestigt werden.

Nachdem zumindest zwei Abdeckungskonsolen 30 in entsprechender Weise an der Tragkonstruktion angebracht sind, wird der Kasten 28 so zwischen den die Abdeckungen 14 bildenden Schenkeln der Abdeckungskonsole 30 angeordnet, dass die jeweilige Abdeckung 14 mit einer Stirnseite 13 des Kastens 28 in Anlage kommt. Die Abdeckungen 14 werden dann in genannter Weise mit dem Kasten 28 verbunden. Wenn der Kasten 28 mittels der Befestigungsschraube fest mit der Abdeckung 14 verbunden ist, dann ist er über die Abdeckungskonsole 30 auch fest an der Tragkonstruktion angebracht.

Auf der dem Kasten 28 abgewandten Außenseite 15 der Abdeckung 14 ist eine umlaufende, in die vom Kasten 28 wegweisende Richtung hervorstehende Randkante 32 angeformt. Die Randkante 32 umgibt einen Aufnahmeraum 27 und bildet ein Anschlagelement 26.

Eine zumindest abschnittsweise metallene Platte bildet eine Blende 16 für die Abdeckung 14. Die Blende 16 ist in ihrer Form an die Form des Aufnahmeraums 27 so angepasst, dass sie diesen vollständig ausfüllt und somit spielfrei oder mit nur geringem Spiel in dem Aufnahmeraum 27 sitzt. Nachdem die Blende 16 in den Aufnahmeraum 27 eingesetzt wird, ist auf der Stirnseite der Markise 10 eine glatte, vorzugsweise stufenlose Fläche gebildet, auf der keinerlei Befestigungselemente oder Verschraubungen sichtbar sind.

Die Blende 16 ist durch die umlaufende Randkante 32 an einer Querverschiebung in ihrer Plattenebene gehindert. Damit die Blende 16 auch an einem Herausfallen gehindert ist, weist sie auf ihrer der Abdeckung 14 zugewandten Seite 33 vier Steckzapfen 18 auf, wobei in der Abdeckung 14 innerhalb des Aufnahmeraums 27 entsprechend vier voneinander beabstandete Einsteckausnehmungen 17 ausgebildet sind, in die jeweils ein Steckzapfen 18 eingesetzt werden kann.

Die Steckzapfen 18 sind vorzugsweise jeweils mit der Blende 16 verschweißt oder verklebt, wobei auch denkbar ist, die Steckzapfen 18 mittels eines Außengewindes in eine mit einem Innengewinde versehene Aussparung in der Blende 16 zu schrauben.

Um ein Herausfallen der Blende 16 aus dem Aufnahmeraum 27 zu verhindern, weist jeder Steckzapfen 18 an einem der Blende 16 abgewandten Klemmabschnitt 19 entlang seines Zapfenumfangs eine nutartige Aussparung 20 auf, in die ein elastisches Klemmelement 21 eingesetzt ist, das den Steckzapfen 18 umgibt und radial über den Steckzapfen 18 hervorsteht. Ein Herausziehen des Steckzapfens 18 aus der Einsteckausnehmung 17 und/oder ein Einstecken des Steckzapfens 18 in die Einsteckausnehmung 17 ist dadurch nur unter elastischer Verformung des Klemmelements 21 möglich.

Figur 2 zeigt die Blende 16 der Markise 10 mit den vier Steckzapfen 18 vergrößert dargestellt aus einer anderen Perspektive. Jeder Steckzapfen 18 ist dabei mittels einer Schweißverbindung 34 an der Blende 16 befestigt, wobei in Richtung einer Längsachse 22 des Steckzapfens 18 an dem der Blende 16 abgewandte Klemmabschnitt 19 ebenfalls das elastische Klemmelement 21 gezeigt ist.

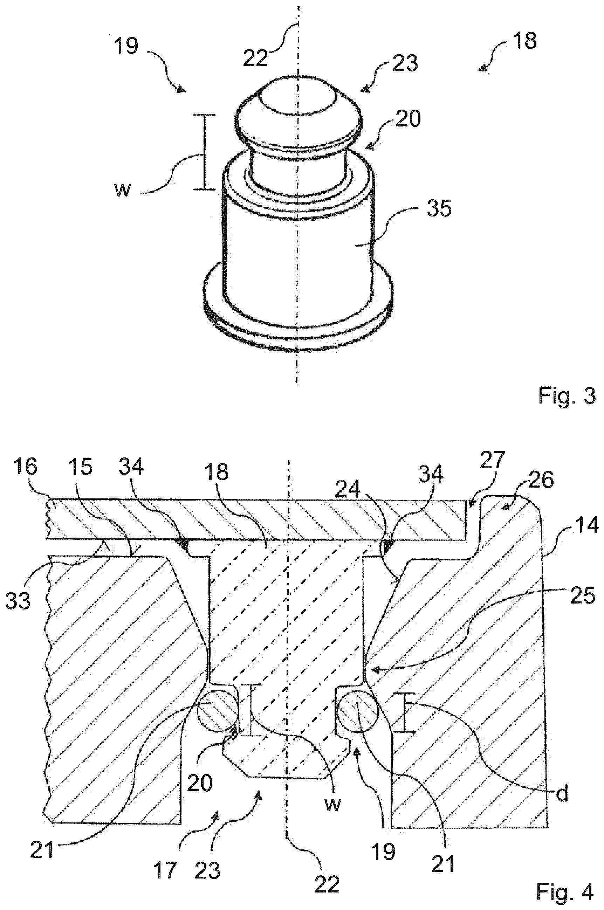

Figur 3 zeigt beispielhaft zur besseren Darstellung einen einzelnen Steckzapfen 18 ohne Klemmelement 21 in einer Perspektivansicht, wobei der Steckzapfen 18 aus einem um die Längsachse 22 des Steckzapfens 18 gebildeten Rotationskörper 35 besteht und an dem Klemmabschnitt 19 die vollständig um den Steckzapfen 18 umlaufende Aussparung 20 in Form einer Ringnut aufweist, die eine axiale, d.h. in Längsrichtung des Steckzapfens 18 gemessene Weite w aufweist und in die ein O-Ring als Klemmelement 21 eingesetzt werden kann. Zur besseren Positionierung und Ausrichtung der Blende 16 bei der Montage weist der Steckzapfen 18 in Richtung der Längsachse 22 nach dem Klemmabschnitt 19 in einem der Blende 16 abgewandten Endbereich 23 eine entlang der Längsachse 22 konisch verlaufende Querschnittsverjüngung auf.

Figur 4 zeigt einen Ausschnitt der Abdeckung 14 und der Blende 16 der Markise 10 in montiertem Zustand in einer Schnittdarstellung, wobei die Blende 16 auf der der Außenseite 15 der Abdeckung 15 zugewandten Seite 33 den Steckzapfen 18 aufweist, der mittels der Schweißverbindung 34 an die Blende 16 geschweißt ist und der in die Einsteckausnehmung 17 der Abdeckung 14 eingesteckt ist.

Dabei weist die Einsteckausnehmung 17 an einer Innenwandung 24 der Abdeckung 14 eine Hinterschneidung 25 auf, die der Steckzapfen 18 mit dem elastischen Klemmelement 21 hintergreift, sodass der Steckzapfen 18 gegen unbeabsichtigtes Herausziehen geschützt ist. Damit ein Herausziehen des Steckzapfens 18 aus der Einsteckausnehmung 17 und/oder ein Einstecken des Steckzapfens 18 in die Einsteckausnehmung 17 nur unter elastischer Verformung des Klemmelements 21 möglich ist sowie die Verformung und/oder eine Verlagerung des Klemmelements 21 entlang der Längsachse 22 des Steckzapfens 18 möglich ist, ist die axiale Weite w der Aussparung 20 in Richtung der Längsachse 22 des Steckzapfens 18 größer als eine Abmessung d des Klemmelements 21 in Richtung der Längsachse 22 des Steckzapfens 18. Vorteilhafterweise liegt ein Verhältnis der Weite w zu der Abmessung d in einem Bereich von 1,1 bis 1,3 - insbesondere aber bei einem Verhältnis von 1,2.

## Patentansprüche

1. Markise (10) mit einer Tuchwelle (11), auf der ein Markisentuch (12) aufgewickelt ist, wobei die Tuchwelle (11) mittelbar oder unmittelbar an zumindest einem Halter angebracht und der Halter an einer Tragkonstruktion befestigbar ist, wobei auf zumindest einer Stirnseite (13) der Tuchwelle (11) eine Abdeckung (14) und auf der der Tuchwelle (11) abgewandten Außenseite (15) der Abdeckung (14) eine Blende (16) angeordnet ist, wobei die Abdeckung (14) zumindest eine Einsteckausnehmung (17) aufweist, in die ein Steckzapfen (18) der Blende (16) einsteckbar ist, **dadurch gekennzeichnet, dass** der Steckzapfen (18) an einem der Blende (16) abgewandten Klemmabschnitt (19) entlang seines Zapfenumfangs mit einer nutartigen Aussparung (20) versehen ist, in die ein elastisches Klemmelement (21) eingesetzt ist, das den Steckzapfen (18) umgibt und radial über den Steckzapfen (18) hervorsteht, wobei das Klemmelement (21) so ausgebildet ist, dass ein Herausziehen des Steckzapfens (18) aus der Einsteckausnehmung und/oder ein Einstecken des Steckzapfens (18) in die Einsteckausnehmung (17) unter elastischer Verformung des Klemmelements (21) möglich ist.

2. Markise (10) nach Anspruch 1, **dadurch gekennzeichnet, dass** das Klemmelement (21) ein O-Ring ist.

3. Markise (10) nach Anspruch 1 oder 2, **dadurch gekennzeichnet, dass** die Aussparung (20) eine vollständig um den Steckzapfen (18) umlaufende Ringnut ist.

4. Markise (10) nach einem der vorstehenden Ansprüche, **dadurch gekennzeichnet, dass** die Aussparung (20) dazu ausgebildet ist, eine Verformung und/oder Verlagerung des Klemmelements (21) entlang einer Längsachse (22) des Steckzapfens (18) zu ermöglichen.

5. Markise (10) nach einem der Ansprüche 1 bis 4, **dadurch gekennzeichnet, dass** eine axiale Weite (w) der Aussparung (20) in Richtung der Längsachse (22) des Steckzapfens (18) größer ist als eine Abmessung (d) des Klemmelements (21) in Richtung der Längsachse (22) des Steckzapfens (18).

6. Markise (10) nach Anspruch 5, **dadurch gekennzeichnet, dass** die Weite (w) größer ist als das 1,2-fache der Abmessung (d), d.h. w ≥ 1,2 · d.

7. Markise (10) nach einem der vorstehenden Ansprüche, **dadurch gekennzeichnet, dass** der Steckzapfen (18) in einem der Blende (16) abgewandten Endbereich (23) eine konisch verlaufende Querschnittsverjüngung aufweist.

8. Markise (10) nach einem der vorstehenden Ansprüche, **dadurch gekennzeichnet, dass** die Einsteckausnehmung (17) an einer Innenwandung (24) eine Hinterschneidung (25) aufweist, die der Steckzapfen (18) mit dem Klemmelement (21) hintergreift, wenn er in die Einsteckausnehmung (17) eingesteckt ist.

9. Markise (10) nach einem der vorstehenden Ansprüche, **dadurch gekennzeichnet, dass** die Abdeckung (14) einen von zumindest einem Anschlagelement (26) begrenzten Aufnahmeraum (27) aufweist und dass die Blende (16) in den Aufnahmeraum (27) eingesetzt ist.

10. Markise (10) nach Anspruch 9, **dadurch gekennzeichnet, dass** das Anschlagelement (26) von einer zumindest teilweise um den Aufnahmeraum (27) umlaufenden Randkante gebildet ist.

11. Markise (10) nach einem der vorstehenden Ansprüche, **dadurch gekennzeichnet, dass** die Abdeckung (14) und/oder die Blende (16) zumindest abschnittsweise aus einem metallischen Werkstoff besteht.

12. Markise (10) nach einem der vorstehenden Ansprüche, **dadurch gekennzeichnet, dass** die Tuchwelle (11) in einem Kasten (28) angeordnet ist und dass der Kasten (28) zwischen zwei Abdeckungen (14) angeordnet und mit diesen verbunden ist.
